(19) **Europäisches Patentamt / European Patent Office / Office européen des brevets**

(11) **EP 4 780 093 A1**

(12) **EUROPEAN PATENT APPLICATION**
published in accordance with Art. 153(4) EPC

(43) Date of publication:
**22.07.2026 Bulletin 2026/30**

(21) Application number: **24870340.7**

(22) Date of filing: **02.09.2024**

(51) International Patent Classification (IPC):
**H04W 56/00** (2009.01)

(52) Cooperative Patent Classification (CPC):
**H04W 56/00; H04W 74/0833**

(86) International application number:
**PCT/CN2024/116232**

(87) International publication number:
**WO 2025/066794 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2023 CN 202311271768**

(71) Applicant: HUAWEI TECHNOLOGIES CO., LTD.
**Shenzhen 518129 (CN)**

(72) Inventors:
• LI, Ruijie
  **Shenzhen, Guangdong 518129 (CN)**
• GUAN, Lei
  **Shenzhen, Guangdong 518129 (CN)**

(74) Representative: **Körber, Martin Hans**
  **Mitscherlich PartmbB**
  **Karlstraße 7**
  **80333 München (DE)**

(54) **COMMUNICATION METHOD, APPARATUS AND SYSTEM**

(57) A communication method, apparatus, and system are provided, and can be applied to a communication scenario including a plurality of radio access technologies RATs. According to the method, a terminal may choose to access one of a plurality of RATs by using one set of synchronization signals. Compared with a base station configuring a synchronization signal for each RAT, the base station can reduce overheads of the synchronization signals, and also reduce complexity of detecting the synchronization signals by the terminal.

FIG. 5

## Description

This application claims priority to Chinese Patent Application No. 2023112717688, filed with the China National Intellectual Property Administration on September 26, 2023 and entitled "COMMUNICATION METHOD, APPARATUS, AND SYSTEM", which is incorporated herein by reference in its entirety.

## TECHNICAL FIELD

This application relates to the communication field, and in particular, to a communication method, apparatus, and system.

## BACKGROUND

With gradual evolution of communication systems, "low carbon" (for example, reducing energy consumption) has attracted increasing attention in communication networks. Currently, even if a network device does not need to transmit data information, the network device still needs to send some common information, so that a terminal device discovers and accesses the network device.

From the perspective of energy consumption, a main technical means for reducing energy consumption is to reduce sending of unnecessary signals. When the network device does not need to transmit data information, the network device may shut down a transmit antenna, to reduce energy consumption. However, in a current communication system, there are two radio access technologies: long term evolution (long term evolution, LTE) and new radio (new radio, NR). The network device separately configures common information for the two radio access technologies and separately sends the common information. As a result, energy consumption is high, and it is inconvenient for the network device to save energy.

## SUMMARY

This application provides a communication method, apparatus, and system. According to the method, overheads of a communication apparatus can be reduced, to reduce energy consumption of the communication apparatus.

According to a first aspect, a communication method is provided. The method may be performed by a terminal apparatus, or may be performed by a chip or a circuit disposed in the terminal apparatus. For ease of description, the following uses an example in which the terminal apparatus performs the method for description.

The method may include: The terminal apparatus receives a synchronization signal, where the synchronization signal is associated with a first radio access technology RAT; the terminal apparatus determines first indication information based on the synchronization signal, where the first indication information indicates a second RAT, and the first RAT is different from the second RAT; and the terminal apparatus accesses the second RAT based on the first indication information.

In the method, one set of synchronization signals can meet synchronization requirements and access requirements of terminal apparatuses of a plurality of RATs, and the terminal apparatus does not need to receive a plurality of sets of synchronization signals in time domain, to reduce energy consumption of the terminal. For a communication apparatus that sends the synchronization signal, the communication apparatus may support synchronization and access of the terminal apparatuses of the plurality of RATs by sending one set of synchronization signals, to reduce signaling overheads of the communication apparatus, and increase a quantity of shut-down opportunities of the communication apparatus that sends the synchronization signal.

With reference to the first aspect, in some implementations of the first aspect, the synchronization signal includes a PSS and/or an SSS.

In this manner, one set of synchronization signals can meet synchronization requirements and access requirements of the terminal apparatuses of the plurality of RATs based on a design of synchronization signals in LTE or 4G.

With reference to the first aspect, in some implementations of the first aspect, the synchronization signal includes an SSB.

In this manner, one set of synchronization signals can meet synchronization requirements and access requirements of the terminal apparatus of the plurality of RATs based on a design of synchronization signals in NR or 5G.

With reference to the first aspect, in some implementations of the first aspect, the first indication information further indicates the first RAT.

In this manner, the first indication information indicates the plurality of RATs.

With reference to the first aspect, in some implementations of the first aspect, the first indication information indicates the plurality of RATs, and the method further includes: The terminal apparatus determines, based on the first indication information, to perform communication by using the second RAT.

In this manner, the first indication information indicates the plurality of RATs for selection by the terminal apparatus. For the terminal apparatus, the terminal apparatus may autonomously determine, based on a capability or a transmission requirement of the terminal apparatus, a RAT used for communication.

With reference to the first aspect, in some implementations of the first aspect, the synchronization signal is used to determine the first indication information, the first indication information indicates the second RAT, and the first RAT is different from the second RAT.

With reference to the first aspect, in some implementations of the first aspect, when the first RAT is LTE, and the second RAT is NR, the first indication information is carried in a MIB and/or a SIB in LTE.

With reference to the first aspect, in some implementations of the first aspect, when the first RAT is NR, and the second RAT is a RAT corresponding to 6G, the first indication information is carried in a MIB and/or a SIB in NR.

With reference to the first aspect, in some implementations of the first aspect, the first RAT is NR, the second RAT is 6G, the synchronization signal includes the SSB, a quantity of physical cell identifiers PCIs corresponding to the first RAT is 1008, and a quantity of PCIs corresponding to the second RAT is greater than 1008.

With reference to the first aspect, in some implementations of the first aspect, that the terminal apparatus receives the synchronization signal includes: The terminal apparatus receives the synchronization signal in a first cell, where the first cell is associated with a first PCI; and the method further includes: The terminal apparatus receives second indication information, where the second indication information indicates a value range of the first PCI; and the terminal apparatus determines, based on the second indication information and the synchronization signal, a second PCI for accessing a second cell of the second RAT.

With reference to the first aspect, in some implementations of the first aspect, the first RAT is NR, and the second RAT is 6G; frequency domain resources included in the first cell are contiguous in frequency domain; and frequency domain resources included in the second cell are non-contiguous in frequency domain.

According to a second aspect, a communication method is provided. The method may be performed by a network apparatus, or may be performed by a chip or a circuit disposed in the network apparatus. For ease of description, the following uses an example in which the network apparatus performs the method for description.

The method may include: The network apparatus sends a synchronization signal, where the synchronization signal is associated with a first RAT. With reference to the second aspect, in some implementations of the second aspect, that the synchronization signal is associated with the first RAT may be replaced with that the synchronization signal is synchronization information of the first RAT.

With reference to the second aspect, in some implementations of the second aspect, the synchronization signal indicates first indication information, and the first indication information indicates a second RAT; or the synchronization signal indicates scheduling information of first common information, the first common information includes first indication information, the first indication information indicates a second RAT; and the first RAT is different from the second RAT.

With reference to the second aspect, in some implementations of the second aspect, the synchronization signal is sent in a first cell of the first RAT, where the first cell is associated with a first PCI; and the method further includes: The network apparatus sends second indication information, where the second indication information indicates a value range of the first PCI, and the first PCI and the second indication information jointly indicate a second PCI of a second cell of the second RAT.

With reference to the second aspect, in some implementations of the second aspect, the first RAT is NR, the second RAT is 6G, the synchronization signal includes an SSB, a quantity of physical cell identifiers PCIs corresponding to the first RAT is 1008, and a quantity of PCIs supported by the second RAT is greater than 1008.

With reference to the second aspect, in some implementations of the second aspect, the first RAT is NR, and the second RAT is 6G; frequency domain resources included in the first cell are contiguous in frequency domain; and frequency domain resources included in the second cell are non-contiguous in frequency domain.

It should be understood that, the second aspect is a method on a network apparatus side corresponding to the first aspect. Related explanations, supplements, and descriptions of beneficial effects of the first aspect are also applicable to the second aspect. Details are not described herein again.

According to a third aspect, an embodiment of this application provides a communication method. The method may be performed by a terminal apparatus, or may be performed by a chip or a circuit disposed in the terminal apparatus. For ease of description, the following uses an example in which the terminal apparatus performs the method for description.

The method may include: The terminal apparatus obtains first common information, where the first common information includes time-frequency resource indication information of a random access channel RACH; and the terminal apparatus sends the RACH, and performs communication by using a first RAT.

With reference to the third aspect, in some implementations of the third aspect, that the terminal apparatus sends the RACH, and performs communication by using the first RAT includes: The terminal apparatus sends the RACH, where the RACH is associated with the first RAT; or the terminal apparatus sends the RACH and third indication information, where the third indication information indicates the first RAT.

In the method, that the terminal apparatus sends the RACH may implicitly indicate a RAT supported by the terminal apparatus or implicitly indicate a RAT selected by the terminal apparatus for access. For example, a relationship between a RACH time-frequency resource and the RAT is predefined. The network apparatus may implicitly obtain, through the RACH, the RAT supported by the terminal apparatus or the RAT selected by the terminal apparatus for access.

With reference to the third aspect, in some implementations of the third aspect, that the terminal apparatus sends the RACH, and performs communication by using the first RAT includes: The terminal apparatus sends the RACH and third indication information, where the third indication information indicates the first RAT.

In this manner, the terminal apparatus explicitly indicates, by using the third indication information, a RAT supported by the terminal apparatus or a RAT selected by the terminal apparatus for access. The network apparatus directly obtains, by using the time-frequency resource of the RACH or the third indication information, the RAT currently supported by the terminal apparatus or the RAT selected for access.

With reference to the third aspect, in some implementations of the third aspect, the terminal apparatus receives second common information, where the first common information and/or the second common information include/includes time-frequency resource indication information of the RACH; and the method further includes: The terminal apparatus determines the RACH based on the first common information and/or the second common information.

Optionally, the first common information includes all time-frequency resource indication information of the RACH, the second common information includes all time-frequency resource indication information of the RACH, or the first common information and the second common information each include a part of time-frequency resource indication information of the RACH.

With reference to the third aspect, in some implementations of the third aspect, the third indication information is carried in a radio resource control connection request message Msg3.

According to a fourth aspect, a communication method is provided. The method may be performed by a network apparatus, or may be performed by a chip or a circuit disposed in the network apparatus. For ease of description, the following uses an example in which the network apparatus performs the method for description.

The method may include: The network apparatus sends first common information, where the first common information includes time-frequency resource indication information of a RACH; and the network apparatus receives the RACH, where the RACH is associated with a first RAT, or the network apparatus receives the RACH and third indication information, where the third indication information indicates the first RAT.

With reference to the fourth aspect, in some implementations of the fourth aspect, second common information is sent, where the first common information and/or the second common information include/includes the time-frequency resource indication information of the RACH

With reference to the fourth aspect, in some implementations of the fourth aspect, the third indication information is carried in a Msg3.

It should be understood that, the fourth aspect is a method on a network apparatus side corresponding to the third aspect. Related explanations, supplements, and descriptions of beneficial effects of the third aspect are also applicable to the fourth aspect. Details are not described herein again.

According to a fifth aspect, an embodiment of this application provides a communication apparatus. The apparatus includes a processing module and a transceiver module. The transceiver module may be configured to receive a synchronization signal, where the synchronization signal is associated with a first RAT, and the processing module is configured to determine first indication information based on the synchronization signal, where the first indication information indicates a second RAT; and the processing module is configured to access the first RAT based on the first indication information.

According to a sixth aspect, an embodiment of this application provides a communication apparatus. The communication apparatus includes a transceiver module and a processing module. The transceiver module is configured to send a synchronization signal, where the synchronization signal is associated with a first RAT.

According to a seventh aspect, an embodiment of this application provides a communication apparatus. The communication apparatus includes a transceiver module and a processing module. The transceiver module is configured to receive first common information, where the first common information includes time-frequency resource indication information associated with a RACH, and the RACH is associated with a first RAT; and the transceiver module is configured to send the RACH; or the transceiver module is configured to send the RACH and third indication information, where the third indication information indicates the first RAT.

According to an eighth aspect, an embodiment of this application provides a communication apparatus. The communication apparatus includes a transceiver module and a processing module. The transceiver module is configured to send first common information, where the first common information includes time-frequency resource indication information associated with a RACH, and the RACH is associated with a RAT; and the transceiver module is configured to receive the RACH; or the transceiver module is configured to receive the RACH and third indication information, where the third indication information indicates the first RAT.

It should be understood that, the fifth aspect, the sixth aspect, the seventh aspect, and the eighth aspect are implementations that are on an apparatus side and that respectively correspond to the first aspect, the second aspect, the third aspect, and the fourth aspect. Related explanations, supplements, possible implementations, and descriptions of beneficial effects of the first aspect, the second aspect, the third aspect, and the fourth aspect are also respectively applicable to the fifth aspect, the sixth aspect, the seventh aspect, and the eighth aspect. Details are not described herein again.

According to a ninth aspect, an embodiment of this application provides a communication apparatus, including an interface circuit and a processor. The interface circuit is configured to implement a function of the transceiver module in the fifth aspect or the seventh aspect, and the processor is configured to implement a function of the processing module in the fifth aspect or the seventh aspect.

According to a tenth aspect, an embodiment of this application provides a communication apparatus, including an interface circuit and a processor. The interface circuit is configured to implement a function of the transceiver module in the sixth aspect or the eighth aspect, and the processor is configured to implement a function of the processing module in the sixth aspect or the eighth aspect.

According to an eleventh aspect, an embodiment of this application provides a computer-readable medium. The computer-readable medium stores program code executed by a terminal device, and the program code includes instructions used to perform the method in the first aspect or the third aspect, any possible manner of the first aspect or the third aspect, or all possible manners of the first aspect or the third aspect.

According to a twelfth aspect, an embodiment of this application provides a computer-readable medium. The computer-readable medium stores program code executed by a network device, and the program code includes instructions used to perform the method in the second aspect or the fourth aspect, any possible manner of the second aspect or the fourth aspect, or all possible manners of the second aspect or the fourth aspect.

According to a thirteenth aspect, a computer program product storing computer-readable instructions is provided. When the computer-readable instructions are run on a computer, the computer is caused to perform the method in the first aspect or the third aspect, any possible manner of the first aspect or the third aspect, or all possible manners of the first aspect or the third aspect.

According to a fourteenth aspect, a computer program product storing computer-readable instructions is provided. When the computer-readable instructions are run on a computer, the computer is caused to perform the method in the second aspect or the fourth aspect, any possible manner of the second aspect or the fourth aspect, or all possible manners of the second aspect or the fourth aspect.

According to a fifteenth aspect, a communication system is provided. The communication system includes an apparatus that has a function of implementing the method and various possible designs in the first aspect or the third aspect, any possible manner of the first aspect or the third aspect, or all possible manners of the first aspect or the third aspect, and an apparatus that has a function of implementing the method and various possible designs in the second aspect or the fourth aspect, any possible manner of the second aspect or the fourth aspect, or all possible manners of the second aspect or the fourth aspect.

According to a sixteenth aspect, a processor is provided. The processor is configured to be coupled to a memory, and is configured to perform the method in the first aspect or the third aspect, any possible manner of the first aspect or the third aspect, or all possible manners of the first aspect or the third aspect.

According to a seventeenth aspect, a processor is provided. The processor is configured to be coupled to a memory, and is configured to perform the method in the second aspect or the fourth aspect, any possible manner of the second aspect or the fourth aspect, or all possible manners of the second aspect or the fourth aspect.

According to an eighteenth aspect, a chip system is provided. The chip system includes a processor, and may further include a memory. The processor is configured to execute a computer program or instructions stored in the memory, to cause the chip system to implement the method in any one of the first aspect to the fourth aspect and any possible implementation of any one of the first aspect to the fourth aspect. The chip system may include a chip, or may include the chip and another discrete device.

According to a nineteenth aspect, a computer program product storing computer-readable instructions is provided. When the computer-readable instructions are run on a computer, the computer is caused to perform the method in the first aspect or the third aspect, any possible manner of the first aspect or the third aspect, or all possible implementations of the first aspect or the third aspect.

According to a twentieth aspect, a computer program product storing computer-readable instructions is provided. When the computer-readable instructions are run on a computer, the computer is caused to perform the method in the second aspect or the fourth aspect, any possible manner of the second aspect or the fourth aspect, or all possible implementations of the second aspect or the fourth aspect.

According to a twenty-first aspect, a communication system is provided. The communication system includes at least one communication apparatus according to the fifth aspect and/or at least one communication apparatus according to the sixth aspect. The communication system is configured to implement the method in the first aspect or the second aspect, any possible manner of the first aspect or the second aspect, or all possible implementations of the first aspect or the second aspect.

According to a twenty-second aspect, a communication system is provided. The communication system includes at least one communication apparatus according to the seventh aspect and at least one communication apparatus according to the eighth aspect. The communication system is configured to implement the method in the third aspect or the fourth aspect, any possible manner of the third aspect or the fourth aspect, or all possible implementations of the third aspect or the fourth aspect.

According to a twenty-third aspect, a communication method is provided. The method includes: A network apparatus sends a synchronization signal to a terminal apparatus, where the synchronization signal is associated with a first radio access technology RAT; the terminal apparatus receives the synchronization signal, and determines first indication information based on the synchronization signal, where the first indication information indicates a second RAT, and the first RAT is different from the second RAT; and the terminal apparatus accesses the second RAT based on the first indication information.

According to a twenty-fourth aspect, a communication method is provided. The method includes: A network apparatus sends first common information to a terminal apparatus, where the first common information includes time-frequency resource indication information of a RACH, and the RACH is associated with a first RAT; and the terminal apparatus sends the RACH to the network apparatus; or the terminal apparatus sends the RACH and third indication information to the network apparatus, where the third indication information indicates the first RAT.

**BRIEF DESCRIPTION OF DRAWINGS**

FIG. 1 shows a system architecture to which embodiments of this application are applicable;
FIG. 2 is a diagram of a structure of an SSB;
FIG. 3(a) to FIG. 3(c) are diagrams of a synchronization signal;
FIG. 4 is a diagram of a time domain resource occupied by a synchronization signal in LTE and NR;
FIG. 5 is a diagram of a communication method according to an embodiment of this application;
FIG. 6 is a diagram of another communication method according to an embodiment of this application;
FIG. 7 is a block diagram of a communication apparatus according to an embodiment of this application; and
FIG. 8 is a block diagram of another communication apparatus according to an embodiment of this application.

**DESCRIPTION OF EMBODIMENTS**

The following describes technical solutions in embodiments of this application with reference to the accompanying drawings.

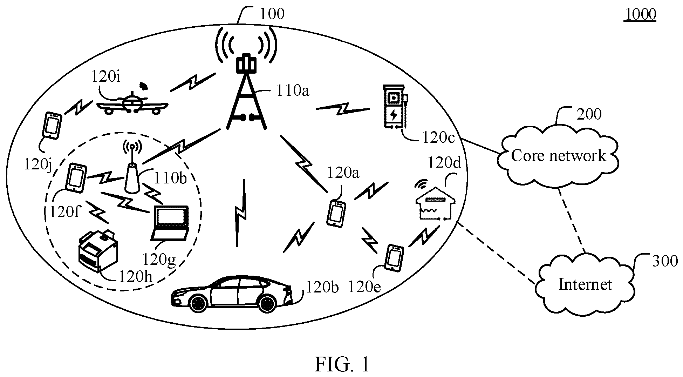

FIG. 1 is a diagram of an architecture of a communication system 1000 to which embodiments of this application are applied. As shown in FIG. 1, the communication system includes a radio access network (radio access network, RAN) 100. The RAN 100 includes at least one RAN node (110a and 110b in FIG. 1, collectively referred to as 110), and may further include at least one terminal (120a to 120j in FIG. 1, collectively referred to as 120). The RAN 100 may further include another RAN node, for example, a wireless relay device and/or a wireless backhaul device (not shown in FIG. 1).

The terminal 120 is connected to the RAN 110 in a wireless manner. The terminals may be connected to each other in a wired or wireless manner and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to assist the terminal in accessing a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in the Wi-Fi system, or the like. The RAN node may be a macro base station (for example, 110a in FIG. 1), may be a micro base station or an indoor base station (for example, 110b in FIG. 1), or may be a relay node, a donor node, or the like. In another application scenario, a plurality of RAN nodes may cooperate to assist the terminal in implementing radio access, and different RAN nodes separately implement a part of functions of the base station. For example, the RAN node may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a function of a part or all of physical layers. For specific descriptions of the foregoing protocol layers, refer to technical specifications related to the 3rd generation partnership project (3rd generation partnership project, 3GPP). An RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses a base station as an example of the RAN node for description.

The terminal may also be referred to as a terminal device, user equipment (user equipment, UE), a terminal apparatus, a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application. For ease of description, the following uses the terminal as an example for description.

The base station and the terminal may be fixed or movable. The base station and the terminal may be deployed on land, including indoor devices, outdoor devices, handheld devices, or vehicle-mounted devices; may be deployed on water; or may be deployed on an airplane, a balloon, and a man-made satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal device. In other words, communication between 110a and 120i is performed based on a radio air interface protocol. Certainly, 110a and 120i may alternatively communicate with each other by using an interface protocol between the base stations. In this case, compared with 110a, 120i is also a base station. Therefore, both the base station and the terminal may be collectively referred to as communication apparatuses. 110a and 110b in FIG. 1 may be referred to as communication apparatuses having a function of the base station, and 120a to 120j in FIG. 1 may be referred to as communication apparatuses having a function of the terminal.

Communication may be performed between the base station and the terminal, between base stations, or between terminals by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In embodiments of this application, the function of the base station may alternatively be performed by a module (for example, a chip) in the base station, or may be performed by a control subsystem having the function of the base station. The control subsystem having the function of the base station herein may be a control center in the foregoing application scenarios such as the smart grid, the industrial control, the smart transportation, and the smart city. The function of the terminal may alternatively be performed by a module (for example, a chip or a modem) in the terminal, or may be performed by an apparatus having the function of the terminal.

The technical solutions provided in embodiments of this application may be applied to wireless communication between communication devices. The wireless communication between communication devices may include wireless communication between a network device and a terminal, wireless communication between network devices, and wireless communication between terminal devices. In embodiments of this application, the term "wireless communication" may also be referred to as "communication" for short, and the term "communication" may also be described as "data transmission", "information transmission", or "transmission".

For ease of understanding of the solutions in embodiments of this application, related concepts are explained.

1. Radio access technology (radio access technology, RAT)

The RAT is a technology used by an air interface of a wireless communication network, and is sometimes referred to as a wireless communication technology or a wireless communication standard, like a global system for mobile communications (Global System for Mobile Communications, GSM), wideband code division multiple access (Wideband Code Division Multiple Access, W-CDMA), long term evolution (Long Term Evolution, LTE), NR, and 6G.

In this application, NR is used as an example of a RAT for a 5G mobile communication network, LTE is used as an example of a RAT for a 4G mobile communication network, and 6G is used as a name of a RAT for a 6G mobile communication network for description. It may be understood that, the RAT for the 6G mobile communication network may be presented with another name in the future.

The following describes differences between LTE, NR, and 6G.

LTE supports one subcarrier spacing. Each cell in LTE and NR includes contiguous frequency resources, and NR supports a plurality of subcarrier spacings. In other words, the NR subcarrier spacing may be flexibly configured. For example, the NR subcarrier spacing may be 15 kHz, 30 kHz, or 60 kHz. A quantity of LTE PCIs is 504, and a quantity of NR PCIs is 1008. For 6G, in some possible designs, a quantity of 6G PCIs is greater than the quantity of NR PCIs, and cells included in 6G may be non-contiguous in frequency domain. In other words, 6G supports non-contiguous frequency domain resources (for example, non-contiguous bandwidths), 6G supports scheduling data on discrete frequency domain resources, or discrete frequency domain resources may be included in a 6G cell. In other words, the quantity of 6G PCIs is greater than 1008, and one or more 6G cells (for example, one or more second cells) may include a plurality of frequency domain resources that are separated from each other. An NR cell (for example, a first cell) is contiguous in frequency domain, NR supports contiguous frequency domain resources (for example, contiguous bandwidths), NR supports scheduling data on contiguous frequency domain resources, or contiguous frequency domain resources may be included in an NR cell. In summary, a subcarrier spacing configuration, a quantity of PCIs, and whether frequency domain resources are contiguous may vary in different RATs.

It should be understood that, LTE, NR, and 6G are used as an example of different RATs in this application. This application is not limited thereto. The solution in this application is also applicable to another RAT, for example, a RAT corresponding to 5.5G.

2. Common information

The common information may also be referred to as common information or nondedicated information, and may be understood as information sent by one communication device to a plurality of communication devices. The communication system shown in FIG. 1 is used as an example. The common information may be understood as information sent by a base station to a plurality of terminal devices or one terminal device group in a cell, may be understood as information sent by a base station to an unspecific terminal device or terminal device group in a cell, or may be understood as information that can be jointly used by a plurality of terminal devices or one terminal device group in a cell. For example, the common information may be a system information block (system information block, SIB), or a synchronization signal and PBCH block (synchronization signal and PBCH block, SSB).

3. Common mode

Signals in different RATs are transmitted through same hardware, which is referred to as the common mode. A scenario in which communication is performed in the common mode is referred to as a common-mode scenario.

For example, a presentation form of the common-mode scenario is that a base station (or a terminal) supports both LTE and NR, and the base station uses a same radio frequency channel to send an NR signal and an LTE signal.

4. Synchronization signal in NR

In an NR system, a terminal device is synchronized with a base station by using an SSB. The SSB may be used by the terminal to access a cell, for example, perform cell search, beam measurement, beam selection, and beam recovery. In NR, the SSB includes a synchronization signal and a broadcast signal. Specifically, the synchronization signal includes a primary synchronization signal (primary synchronization signal, PSS) and a secondary synchronization signal (secondary synchronization signal, SSS), and the broadcast signal includes a PBCH.

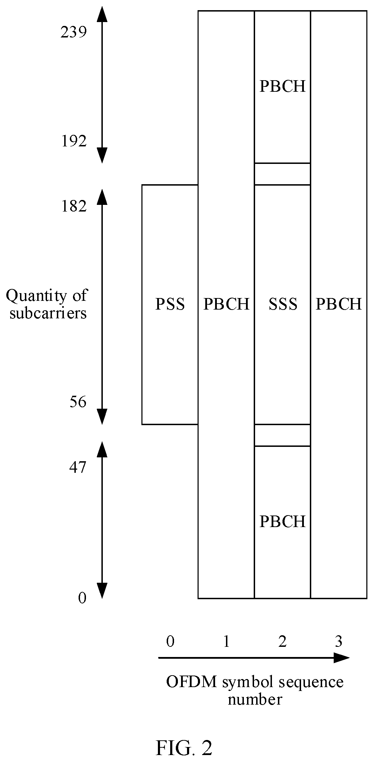

Specifically, FIG. 2 is an example of a time-frequency domain structure of an SSB in NR. The SSB occupies four orthogonal frequency division multiplexing (orthogonal frequency division multiplexing, OFDM) symbols in time domain, and occupies 20 resource blocks (resource blocks, RBs) in frequency domain, that is, 240 subcarriers (subcarriers, SCs).

The SSB in NR mainly has two functions: (1) performing cell synchronization and obtaining a master system message (master information block, MIB), where the MIB may be carried through a PBCH; and (2) performing beam training.

(1) Cell synchronization: The PSS and the SSS may carry a physical cell identifier (physical cell identifier, PCI), and the terminal obtains the PCI by detecting the PSS and the SSS. In NR, the PBCH of the SSB carries an SSB index (index), and each SSB index corresponds to a sending position of one SSB. The terminal may detect the SSB index and a moment to complete downlink timing synchronization.

(2) Beam training: Beam training is usually also referred to as beam alignment or beam selection. In beam training, a channel is detected by using a simulated transmit beam and a simulated receive beam, to search for a transmit and receive beam combination with maximum received signal energy, namely, a beam pair most suitable for transmission of the channel, to avoid direct estimation of an air interface channel. For example, one SSB pattern (pattern) may include a plurality of SSB indexes, and different SSB indexes may correspond to different transmit beams of a base station. UE may detect SSBs, and select an optimal SSB index, for example, an SSB index 1, to complete wide beam training. In addition, the UE may alternatively receive a plurality of receive beams, receive one SSB index 1 by using different receive beams, and select an optimal receive beam, for example, a receive beam 2, to complete receive beam training on a UE side. A function of a wide beam of the base station includes: (1) The UE sends, by using the receive beam 2, a SIB 1/paging at a position corresponding to the SSB index 1, to improve coverage of the SIB 1/paging; (2) the UE sends a physical random access channel (physical random access channel, PRACH) at the position corresponding to the SSB index 1, and the base station may receive the PRACH by using a same wide beam used by the base station to send the SSB index 1, to improve a receiving success probability of the PRACH; and (3) after the UE completes initial access and establishes a radio resource control (radio resource control, RRC) connection, the base station may perform fine beam training based on the wide beam (the receive beam 2), in other words, perform training only on fine beams in a range of the receive beam 2, to reduce overheads of fine beam training.

In addition, the terminal needs to blindly detect a position of the SSB However, because a cell bandwidth in NR is very wide, if the terminal attempts to detect the SSB at each frequency, an access speed of the terminal is very low. Therefore, a synchronization raster (synchronization raster) is defined in an NR protocol, and is used to determine a frequency position of a candidate SSB. In other words, the terminal only needs to attempt to detect the SSB at a frequency domain position determined by the synchronization raster, to increase a speed of detecting the SSB by the terminal. An interval between two adjacent frequency domain positions determined by the synchronization raster has different values, namely, 1200 kHz, 1.44 MHz, and 17.28 MHz respectively, in different bands. For example, as shown in Table 1, the terminal only needs to detect an SSB at a frequency determined by $SS_{REF}$, and does not need to perform detection at all frequencies. In the following table, a calculated result of $SS_{REF}$ indicates a center frequency of an SSB. With reference to the fact that the SSB includes four contiguous symbols in time domain and occupies 20 RBs in frequency domain, the calculated result of $SS_{REF}$ indicates a position at which a resource element (resource element, RE) is equal to 0 in a tenth RB in the SSB.

Table 1: Frequency raster parameters (GSCN parameters for the global frequency raster)

| Frequency range (MHz) | $SS_{REF}$ | GSCN | GSCN range |
|---|---|---|---|
| 0 to 3000 | N*1200 kHZ+M*50 kHz, N=1:2499, M∈{1, 3, 5} | 3N+(M-3)/2 | 2 to 7489 |
| 3000 to 24250 | 3000 MHz+N*1.44 MHz N=0:14756 | 7499+N | 7499 to 22255 |
| 24250 to 100000 | 24250.08 MHz+N*17.28 MHz N=0:4383 | 22256+N | 22256 to 26639 |
| Note: Only a default value of M=3 of an operating band of an SCS spacing channel raster is supported. | | | |

In Table 1, $SS_{REF}$ represents the center frequency of the SSB, and GSCN represents a global synchronization channel number (Global Synchronization Channel Number).

A frequency domain position of an SSB may be determined based on the foregoing synchronization raster, and a time domain position of the SSB may be determined based on an SSB pattern. For example, one SSB pattern represents time domain positions of a group of contiguous SSBs in a half-frame (Half-Frame).

5. Synchronization signal in LTE

Similar to that in an NR system, a PBCH in LTE also carries a MIB. A difference lies in that the MIBs have different specific information content. Information carried on the PBCH in LTE may be used for terminal synchronization.

The MIB in LTE is used by the terminal to obtain basic cell configuration information, mainly including a downlink system bandwidth, a physical HARQ indicator channel (physical HARQ indicator channel, PHICH) configuration, and a system frame number (system frame number, SFN). The PBCH carrying the MIB is located on the first four OFDM symbols in a second slot of a subframe 0 of each system frame in time domain. In LTE, one subframe is divided into two slots, in other words, a length of one slot is 0.5 ms.

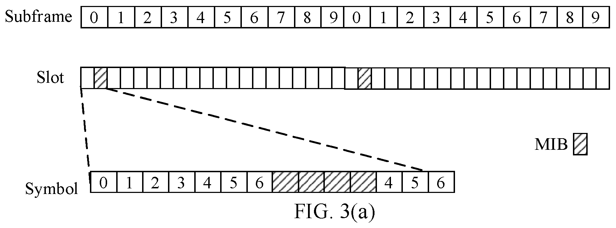

Specifically, as shown in FIG. 3(a), the PBCH may occupy the first four symbols in a second slot of a subframe 0, for example, four symbols whose indexes are 0, 1, 2, and 3.

Functions of a PSS and an SSS in LTE are similar to functions of the PSS and the SSS in NR. However, the PSS and the SSS in LTE are not transmitted as a block as in NR, but are separately transmitted. Main functions are: (1) completing frequency and symbol synchronization (downlink synchronization) with a cell; (2) obtaining a system frame timing (timing), that is, a start position of a downlink frame; and (3) determining a PCI of the cell.

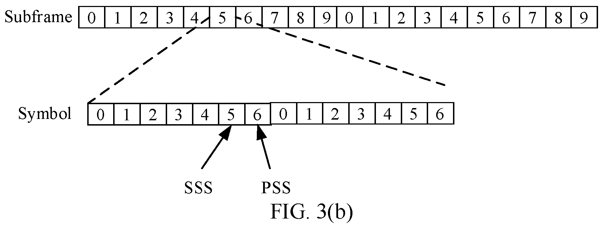

For example, as shown in FIG. 3(b), for frequency division duplex (frequency division duplex, FDD), the PSS is sent on a last OFDM symbol in a first slot (slot) of a subframe 5. The SSS and the PSS are sent in a same slot in a same subframe, but the SSS is located on the last but one OFDM symbol, that is, one OFDM symbol earlier than the PSS.

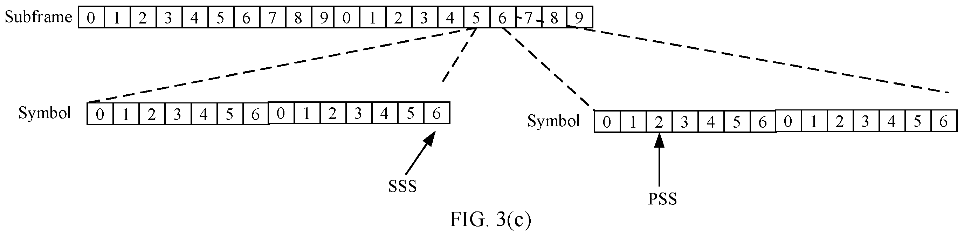

In addition, as shown in FIG. 3(c), for time division duplex (time division duplex, TDD), the PSS is sent on a third OFDM symbol of each of subframes 1 and 6, and the SSS is sent on a last OFDM symbol of each of subframes 0 and 5, that is, three symbols earlier than the PSS.

In addition, in LTE, 504 different PCIs are defined in total, and each PCI corresponds to one specific downlink reference signal sequence. All the PCIs are divided into 168 groups (corresponding to a variable $N_{ID}^1$, with a value range of 0 to 167). Each group includes three cell IDs (corresponding to a variable $N_{ID}^2$, with a value range of 0 to 2). For a manner of determining the PCI, refer to the following relationship.

$$N_{ID}^{cell} = 3N_{ID}^1 + N_{ID}^2,$$

where, $N_{ID}^{cell}$ is a cell identifier PCI.

The foregoing describes the synchronization signal, and the following provides an example of two types of common information.

6. SIB 1

The SIB 1 is carried on a physical downlink data channel (physical downlink shared channel, PDSCH). A time-frequency position and a transmission parameter of the PDSCH carrying the SIB 1 are indicated by using downlink control information (downlink control information, DCI), and the DCI corresponding to the SIB 1 is jointly determined by using a CORESET and a common search space 0 (common search space 0, CSS0, also referred to as *searchSpaceZero*). In addition, a beam used by a base station to send the SIB 1 is the same as a beam used by the base station to send an SSB that indicates a time-frequency position of the DCI for scheduling the SIB 1. Correspondingly, a beam used by a terminal to receive the SIB 1 is the same as a beam used by the terminal to receive an SSB that indicates a time-frequency position of the DCI for scheduling the SIB 1.

Alternatively, the SIB 1 may be considered as remaining minimum system information (remaining minimum system information, RMSI), or may be considered as a first system message sent after a MIB. Alternatively, the SIB 1 may be considered as a system message including time-frequency resource indication information of a RACH. Alternatively, the SIB 1 may be considered as information carried in a PDSCH scheduled by using a PDCCH determined based on a CORESET 0 and the CSS 0. The SIB 1 includes a parameter used to determine whether a cell is suitable for cell selection, and time domain scheduling information of another SIB.

It can be learned from the foregoing that, synchronization signals in LTE and NR are different. For example, resource positions occupied by synchronization signals in two RATs in time domain are different from each other. In addition, for a terminal that only supports one RAT, the terminal can only detect synchronization signal corresponding to the RAT supported by the terminal. For example, a terminal that supports NR receives an SSB, and obtains common information such as a MIB and a SIB 1 based on the SSB. Then the terminal accesses a network based on the common information. A terminal that supports LTE receives a PSS/an SSS, and obtains common information such as a MIB and a SIB 1 based on the PSS/the SSS. Then, the terminal accesses a network based on the common information.

For a terminal that can support a plurality of RATs, the terminal may identify synchronization signals in different RATs. Different physical layer protocols and signal parameters are used in different RATs. Therefore, the terminal needs to identify and decode a corresponding synchronization signal, thereby detecting and decoding the synchronization signal based on a corresponding RAT specification, to synchronize and communicate with the base station. The terminal scans different frequency bands in a search process, attempts to decode a detected synchronization signal to determine an available RAT, and accesses the network by using a corresponding RAT. It can be learned from the foregoing descriptions that, to maintain a basic communication function (for example, synchronization or cell discovery), even if there is no data transmission, the base station still needs to frequently send some common signaling. For example, the base station separately sends a synchronization signal in LTE and a synchronization signal in NR, so that a terminal supporting NR accesses an NR network, and a terminal supporting LTE accesses an LTE network. Alternatively, for a terminal that supports both LTE and NR, the terminal needs to access an NR network based on the synchronization signal in NR, and access an LTE network based on the synchronization signal in LTE.

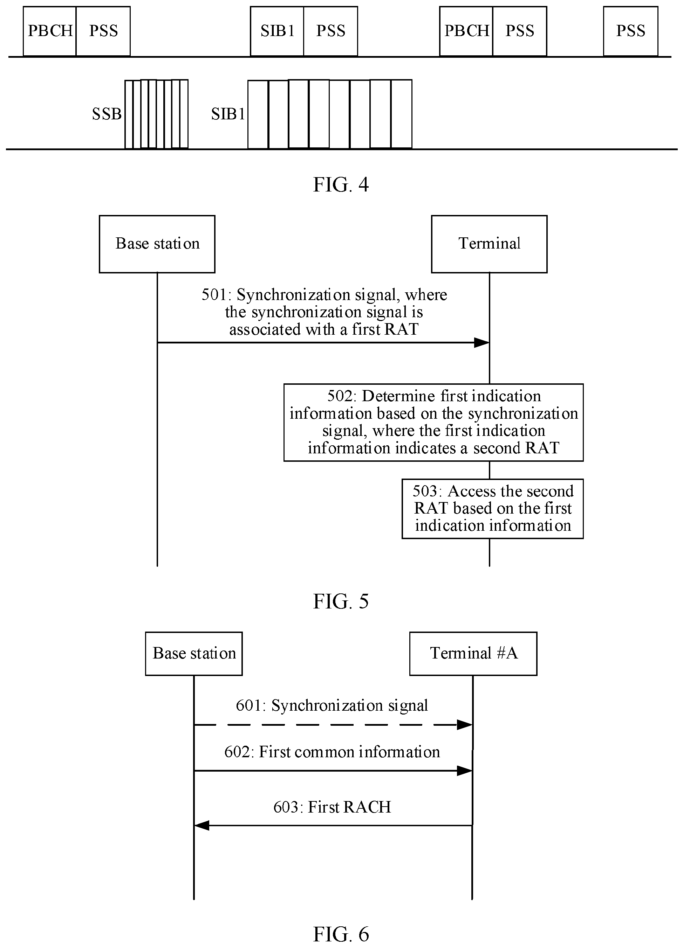

However, time domain resources of different signals are independently configured, and an overlap rate of time-frequency resources is low. FIG. 4 is a diagram of a common information configuration. In the figure, a horizontal axis represents a time domain, and a vertical axis represents a frequency domain. In the figure, a first row indicates distribution of LTE common information in time domain, and a second row indicates distribution of NR common information in time domain. A base station needs to send two different sets of common information to indicate different RATs. As a result, overheads are high. In addition, the base station only can shut down a transmit antenna within time when no signal is transmitted in all different RATs. As a result, the base station has a small quantity of shut-down opportunities, and power consumption of the base station is high.

It should be understood that, the foregoing uses only NR and LTE as an example of different RATs, and this problem may also exist between other RATs or between new RATs proposed in future technology development. In other words, when common information in different RATs, for example, synchronization signals, has a low overlap rate in time domain, there may be a problem that the base station has a small quantity of shut-down opportunities and power consumption of the base station is high.

In view of this, this application provides a communication method, so that a quantity of shut-down opportunities of a base station can be increased and energy consumption of the base station can be reduced.

In embodiments, 6G refers to a RAT of a 5G-based next generation communication technology. The following uses 6G, LTE, and NR as an example for detailed description. It should be noted that, other different RATs are also applicable to the solution in this application, and shall all fall within the protection scope of this application.

FIG. 5 is a diagram of a communication method 500 according to an embodiment of this application. The method 500 may include the following steps.

501: A base station sends a synchronization signal to a terminal, and correspondingly, the terminal receives the synchronization signal.

The synchronization signal is associated with a first RAT. Alternatively, the synchronization signal is a synchronization signal in the first RAT.

In a possible implementation, the synchronization signal is associated with the first RAT based on a format (also referred to as a structure or a standard). For example, the synchronization signal is a synchronization signal in NR, that is, the synchronization signal is associated with NR. In other words, if a format of the synchronization signal is the same as a format of a synchronization signal in NR, the synchronization signal is associated with NR. For example, if a time-frequency resource occupied by the synchronization signal is the same as a time-frequency resource occupied by an SSB in FIG. 2, the synchronization signal is associated with NR. In other words, the synchronization signal is the synchronization signal in NR.

The following describes a manner of associating the synchronization signal with the first RAT in several cases of a common-mode scenario.

Case 1: In a common-mode scenario of LTE and NR, the synchronization signal includes a PSS and/or an SSS. For example, the PSS is a PSS in LTE, and the SSS is an SSS in LTE. That is, the synchronization signal still uses a structure of the PSS and the SSS in LTE, or the first RAT associated with the synchronization signal is LTE. In this example, the synchronization signal may further include a PBCH in LTE. For a structure of the PSS, a structure of the SSS, and a structure of the PBCH in LTE, refer to the foregoing related descriptions of the synchronization signal in LTE. Details are not described herein.

Case 2: In a common-mode scenario of NR and 6G, the synchronization signal is an SSB. For example, the SSB is an SSB in NR, that is, the first SSB still uses a structure of the SSB in NR, and the first RAT associated with the SSB is NR. For a structure of the SSB in NR, refer to the foregoing descriptions. Details are not described herein again.

Case 3: In a common-mode scenario of LTE and 6G, the synchronization signal includes a PSS and/or an SSS. For example, the PSS is a PSS in LTE, and the SSS is an SSS in LTE. That is, the synchronization signal still uses a structure of the PSS and the SSS in LTE, or the first RAT associated with the synchronization signal is LTE. In this example, the synchronization signal may further include a PBCH in LTE. For a structure of the PSS, a structure of the SSS, and a structure of the PBCH in LTE, refer to the foregoing related descriptions of the synchronization signal in LTE. Details are not described herein.

It should be understood that, in this step, that the terminal receives the synchronization signal may also be understood as that the terminal detects the synchronization signal. In the following, each part related to the terminal receiving the synchronization signal may be replaced with that the terminal detects the synchronization signal.

In the foregoing several possible cases, in the common-mode scenario, the base station sends a synchronization signal in an old-version RAT to the terminal, and the terminal may perform communication by using a new-version RAT based on the synchronization signal in the old-version RAT. The method has good backward compatibility. For example, it is assumed that in the common-mode scenario of LTE and 6G, if the base station sends a 6G synchronization signal, a terminal that only supports a synchronization signal in LTE cannot obtain common information by using the synchronization signal sent by the base station. According to the method in the foregoing case 3, a terminal that is designed to support 6G can access a network by using a synchronization signal in LTE, so that a terminal that only supports LTE can be enabled to detect and parse the synchronization signal, to avoid a communication exception.

502: The terminal determines first indication information based on the synchronization signal.

The first indication information indicates a second RAT, and the second RAT is different from the first RAT.

In a possible implementation, the terminal detects the synchronization signal to obtain the first indication information, where the first indication information indicates the second RAT.

For example, the terminal needs to detect the synchronization signal to obtain the common information, and the first indication information is carried in the common information.

In a possible implementation, the terminal detects a synchronization signal like an SSB, and obtains a CORESET 0 and a CSS 0 based on a MIB in the SSB, to determine a frequency domain position and a time domain position at which DCI for scheduling a SIB 1 is received. The DCI indicates a time-frequency position and a transmission parameter of a PDSCH that carries the SIB 1, and the terminal receives the PDSCH based on the DCI, to obtain the SIB 1.

In other words, the base station jointly indicates, by using the synchronization signal and the common information indicated by the synchronization signal, a plurality of RATs supported by a current network. For example, the base station implicitly indicates one RAT through step 501, and explicitly indicates another RAT by using the common information in step 502.

The following uses a SIB as an example of the common information for detailed description. The terminal obtains the SIB based on the synchronization signal, where the first indication information is carried in the SIB 1. For example, the first indication information is one field in the SIB. A state value of this field indicates the first RAT.

In a possible manner, the first indication information may further indicate the first RAT. In other words, the first indication information may indicate a plurality of RATs. For example, the first indication information is one field in the SIB, and different state values of the field indicate different RATs. For example, the first indication information occupies 2 bits, a state value 00 of the 2 bits indicates LTE, a state value 01 of the 2 bits indicates NR, and a state value 10 of the 2 bits indicates 6G. For example, the first indication information is 1 bit, a state value 0 of the bit indicates LTE, and a state value 1 of the bit indicates NR. For example, the first indication information is 1 bit, a state value 0 of the bit indicates NR, and a state value 1 of the bit indicates 6G.

For a manner in which the terminal detects the synchronization signal to obtain the SIB 1, refer to the foregoing descriptions.

It should be understood that, the foregoing descriptions are provided by using an example in which the synchronization signal and the common information respectively indicate different RATs. Alternatively, the synchronization signal and the common signal may indicate a same RAT. For example, the synchronization signal is a synchronization signal in the first RAT, and the first indication information indicates the first RAT. That is, the second RAT is the same as the first RAT. In this manner, the base station indicates to the terminal that the current network only supports the first RAT.

The following describes the common information in the several common modes.

Case A: In the common-mode scenario of LTE and NR, the terminal detects the synchronization signal in LTE to determine common information, where first indication information carried in the common information indicates NR. In other words, in this scenario, the common information still uses a design in LTE, and the common information is one or more of a MIB, a SIB 1, or a SIB x in LTE. The SIB x represents one or more system messages in system messages other than the SIB 1.

Case B: In the common-mode scenario of NR and 6G, the terminal detects the synchronization signal in NR to determine common information, where first indication information carried in the common information indicates 6G. In other words, the common information still uses a design in NR, and the common information is one or more of a MIB, a SIB 1, or a SIB x in NR. The SIB x represents one system message in system messages other than the SIB 1.

Case C: In the common-mode scenario of LTE and 6G, the terminal detects the synchronization signal in LTE to determine common information, where first indication information carried in the common information indicates 6G. In other words, in this scenario, the common information still uses a design in LTE, and the common information is one or more of a MIB, a SIB 1, or a SIB x in LTE. The SIB x represents one or more system messages in system messages other than the SIB 1.

It should be noted that, the common information in the case A, the case B, and the case C may be different from each other. For example, in the case A, the first indication information is carried in a first MIB; in the case B, the first indication information is carried in a second MIB; and in the case C, the first indication information is carried in a third MIB, where the first MIB, the second MIB, and the third MIB occupy different time domain resources.

In actual communication, the terminal needs to access the network in a cell. In other words, the terminal needs to obtain a PCI of the cell in a process of accessing the network. In NR, a sequence of an SSB is associated with the PCI, and the terminal may determine, based on the sequence of the SSB, the PCI corresponding to the sequence of the SSB from 1008 PCIs. However, for 6G, a quantity of PCIs may be larger, that is, the quantity of PCIs is greater than 1008. Therefore, in a scenario in which the first RAT is NR, and the second RAT is 6G, this application provides a method for determining the PCI. Details are described below.

The terminal receives the synchronization signal in a first cell, and the first cell is associated with a first PCI. For an association manner between the first cell and the first PCI, refer to an association relationship between the sequence of the SSB and the PCI in NR. Further, the terminal receives, in the first cell, second indication information, where the second indication information indicates a value range of the first PCI, and the terminal determines, based on the second indication information and the synchronization signal, a second PCI of a second cell of the second RAT.

For example, the second indication information is a 1-bit field. When a value of the second indication information is 0, a value range of the PCI is from 0 to 1007, and when a value of the second indication information is 1, a value range of the PCI is from 1008 to 2015. That the terminal determines the value range of the first PCI based on the second indication information may be specifically as follows: If a value of the second indication information is 1, and the terminal determines, based on the synchronization signal, that the first PCI is 5, the second PCI is 5+1008.

In addition, a correspondence between a value of the second indication information and a meaning indicated by the value may be predefined, or may be configured by the base station by using signaling.

503: The terminal accesses the second RAT based on the first indication information.

Specifically, that the terminal accesses the second RAT may be that the terminal sends a RACH of the second RAT, or the terminal receives paging of the second RAT.

In the method shown in FIG. 5, the terminal may choose to access one of more than two RATs by using one set of synchronization signals. Compared with independently configuring a synchronization signal for each RAT, the base station can reduce signaling overheads, and also increase opportunities for the base station to shut down a transmit antenna, to facilitate energy saving of the base station.

An embodiment of this application further provides a communication method. According to the method, a base station can obtain a RAT supported by a terminal, to further improve communication efficiency.

In this solution, a communication system includes at least two terminals. The following separately uses a terminal #A and a terminal #B as an example for description. The terminal #A and the terminal #B support different RATs. For example, the terminal #A supports LTE, and the terminal #B supports NR; the terminal #A supports NR, and the terminal #B supports 6G; or both the terminal #A and the terminal #B support a plurality of RATs, but may access different RATs. For ease of description, the following embodiment is described by using an example in which the RAT supported by the terminal #A is 6G and the RAT supported by the terminal #B is NR.

Accessing a RAT may be understood as using the RAT for communication. For example, refer to a random access procedure of the terminal. Details are not described herein.

The following uses the terminal #A as an example of the terminal apparatus.

As shown in FIG. 6, the method may include the following steps.

Optionally, 601: The base station sends a synchronization signal to the terminal #A, and correspondingly, the terminal #A receives the synchronization signal.

Specifically, the synchronization signal is used for downlink synchronization. For a manner in which the terminal #A receives the synchronization signal, refer to the foregoing descriptions. Details are not described again. Optionally, the terminal #A may be one of a plurality of terminals. For example, the base station may send a synchronization signal to the terminal #A and the terminal #B, and the terminal #A and the terminal #B receive a same synchronization signal. In other words, the base station supports two RATs, but sends only one set of synchronization signals. In this way, power consumption of the base station can be reduced.

602: The base station sends first common information to the terminal #A, and correspondingly, the terminal #A receives the first common information.

The first common information includes time-frequency resource indication information of a random access channel (random access channel, RACH). In other words, the first common information includes the time-frequency resource indication information of the RACH.

In a possible manner, common information received by the terminal #A is the same as common information received by the terminal #B. For example, the first common information is a SIB 1. The SIB 1 may carry the time-frequency resource indication information of the RACH. The terminal #A supporting 6G may receive a same SIB 1 as the terminal #B supporting NR. In a possible implementation, in 6G, there may be function information that does not exist in NR. Therefore, optionally, the terminal #A may further detect other common information, for example, second common information. The second common information carries function information that does not exist in NR. For example, the second common information is a SIB x.

Optionally, the time-frequency resource indication information of the RACH may be indicated by using the first common information, may be indicated by using the second common information, or may be jointly indicated by using the first common information and the second common information. In other words, the terminal #A may determine the time-frequency resource of the RACH based on the first common information and/or the second common information.

In another possible manner, the common information received by the terminal #A is different from the common information received by the terminal #B. In other words, the common information received by terminals that support different RATs is different from each other. For example, the terminal #A receives the first common information, and the terminal #B receives third common information. The first common information is different from the third common information. A difference may lie in that content of the first common information is different from content of the third common information, and/or time-frequency resources occupied by the first common information and the third common information are different from each other.

603: The terminal #A sends a first RACH to the base station.

Example 1: The terminal #A sends the first RACH to the base station based on the first common information. The RACH is associated with a first RAT, or the RACH is a RACH of the first RAT. The first RAT is a RAT supported by the terminal #A, and is a RAT selected by the terminal #A for access.

When the terminal #A sends the first RACH to the base station, the base station may determine the RAT supported by the terminal #A based on the first RACH and an association relationship between the first RACH and a RAT. It should be understood that, the association relationship between the first RACH and the corresponding first RAT may be preset, or may be configured. The terminal #B may also send a RACH based on the first common information. Alternatively, the terminal #B sends a RACH based on the third common information. RACHs sent by the terminal #A and the terminal #B may be the same as or different from each other.

In this manner, the RACH is associated with the first RAT, and the terminal implicitly indicates the first RAT through the RACH. For example, a resource of the RACH is associated with the first RAT, the resource may be at least one of a time domain resource, a frequency domain resource, or a code resource, and the code resource may be a sequence. For example, an association relationship between a sequence used by the RACH and the RAT is predefined or configured. The base station learns of the first RAT by using a sequence of the RACH.

Example 2: The terminal #A sends the first RACH and third indication information to the base station, where the third indication information indicates a RAT supported by the terminal #A, or the third information indicates a RAT selected by the terminal #A for access. Alternatively, the terminal #B may send indication information to the base station, for example, fourth indication information. The fourth indication information indicates a RAT supported by the terminal #B, or indicates a RAT selected by the terminal #B for access.

In this manner, the terminal #A explicitly indicates the first RAT by using the first indication information. The base station may determine the first RAT by using the third indication information.

In a possible implementation, the third indication information may be a radio resource control connection request message (RRCConnectionRequest), that is, a Msg3. Alternatively, the terminal #A reports the supported first RAT in the Msg3. Alternatively, the third indication information may be separately sent.

In a possible implementation, the terminal further reports an identifier (for example, an ID) of the terminal to the base station, so that the base station determines a RAT supported by the terminal or a RAT selected by the terminal for access. For example, the terminal #A reports an ID #A to the base station, and reports that a RAT selected for access is NR. The terminal #B reports an ID #B to the base station, and selects LTE as a RAT for access. The base station determines that the terminal with the ID #A uses NR for communication and the terminal with the ID #B uses LTE for communication, and separately delivers configurations based on corresponding RATs.

In the method, there are a plurality of terminals in a communication network, and the plurality of terminals may be a plurality of terminals that support a plurality of RATs. The terminal reports, to the base station, the RAT supported by the terminal or the RAT selected by the terminal for access, and the base station may align with a current communication requirement of the terminal. A RAT of the common information sent by the base station does not need to be distinguished. This facilitates energy saving of the base station.

A person of ordinary skill in the art may be easily aware that, units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

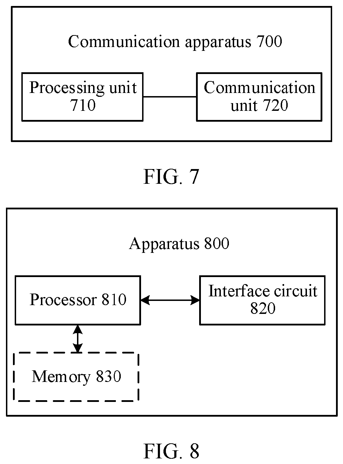

FIG. 7 and FIG. 8 each are a diagram of a possible structure of a communication apparatus according to an embodiment of this application. The communication apparatuses may be configured to implement functions of the terminal or the base station in the foregoing method embodiments. Therefore, beneficial effects of the foregoing method embodiments can also be implemented. In embodiments of this application, the communication apparatus may be one of the terminals 120a to 120j shown in FIG. 1, may be the base station 110a or 110b shown in FIG. 1, or may be a module (like a chip) used in the terminal or the base station.

As shown in FIG. 7, the communication apparatus 700 includes a processing unit 710 and a transceiver unit 720. The communication apparatus 700 is configured to implement the functions of the terminal or the base station in the method embodiment shown in FIG. 5 or FIG. 6.

When the communication apparatus 700 is configured to implement the function of the terminal in the method embodiment shown in FIG. 4, the transceiver unit 720 is configured to receive a synchronization signal; the processing unit 710 is configured to determine common information #A based on the synchronization signal; and the processing unit 710 is further configured to access a second RAT based on the synchronization signal.

When the communication apparatus 700 is configured to implement the function of the base station in the method embodiment shown in FIG. 4, the transceiver unit 720 is configured to send a synchronization signal.

When the communication apparatus 700 is configured to implement the function of the base station in the method embodiment shown in FIG. 6, the transceiver unit 720 is configured to send a synchronization signal; the transceiver unit 720 is configured to send first common information; the transceiver unit 720 is configured to send the first common information; the transceiver unit 720 is configured to receive third indication information; and the transceiver unit 720 may be further configured to send a Msg3.

When the communication apparatus 700 is configured to implement the function of the terminal in the method embodiment shown in FIG. 6, the transceiver unit 720 is configured to receive a synchronization signal; the transceiver unit 720 is configured to receive first common information; the transceiver unit 720 is configured to receive the first common information; the transceiver unit 720 is configured to send third indication information; and the transceiver unit 720 may be further configured to receive a Msg3.

For more detailed descriptions about the processing unit 710 and the transceiver unit 720, directly refer to related descriptions in the method embodiments shown in FIG. 5 and FIG. 6. Details are not described herein again.

As shown in FIG. 8, the communication apparatus 800 includes a processor 810 and an interface circuit 820. The processor 810 and the interface circuit 820 are coupled to each other. It may be understood that, the interface circuit 820 may be a transceiver or an input/output interface. Optionally, the communication apparatus 800 may further include a memory 830 configured to store instructions to be executed by the processor 810, store input data required by the processor 810 to run the instructions, or store data generated after the processor 810 runs the instructions.

When the communication apparatus 800 is configured to implement the method shown in FIG. 4 or FIG. 6, the processor 810 is configured to implement a function of the foregoing processing unit 710, and the interface circuit 820 is configured to implement a function of the foregoing transceiver unit 720.

When the foregoing communication apparatus is a chip used in a terminal, the chip in the terminal implements the function of the terminal in the method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the foregoing communication apparatus is a module used in a base station, the base station module implements the function of the base station in the foregoing method embodiment. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any regular processor, or the like.

The method steps in embodiments of this application may be implemented in hardware, or may be implemented in software instructions executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to the processor, so that the processor can read information from the storage medium and write information into the storage medium. The storage medium may be a component of the processor. The processor and the storage medium may be disposed in an ASIC. In addition, the ASIC may be located in the base station or the terminal. The processor and the storage medium may exist in the base station or the terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, procedures or functions in embodiments of this application are all or partially executed. The computer may be a general-purpose computer, a dedicated computer, a computer network, a base station, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

Depending on whether the following is used in this specification, the following is optional: In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that, various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:

   receiving a synchronization signal, wherein the synchronization signal is associated with a first radio access technology RAT;
   determining first indication information based on the synchronization signal, wherein the first indication information indicates a second RAT, and the second RAT is different from the first RAT; and
   accessing the second RAT based on the first indication information.

2. The method according to claim 1, wherein the synchronization signal comprises a primary synchronization signal PSS and/or a secondary synchronization signal SSS, or the synchronization signal comprises a synchronization signal block SSB.

3. The method according to claim 1 or 2, wherein the first indication information further indicates the first RAT.

4. The method according to any one of claims 1 to 3, wherein when the first RAT is NR, and the second RAT is 6G, the first indication information is carried in a master system block MIB.

5. The method according to any one of claims 1 to 4, wherein the first RAT is new radio NR, the second RAT is 6G, the synchronization signal comprises the SSB, a quantity of physical cell identifiers PCIs corresponding to the first RAT is 1008, and a quantity of PCIs corresponding to the second RAT is greater than 1008.

6.  The method according to any one of claims 1 to 4, wherein the receiving the synchronization signal comprises:

    receiving the synchronization signal in a first cell of the first RAT, wherein the first cell is associated with a first PCI; and
    the method further comprises:

        receiving second indication information, wherein the second indication information indicates a value range of the first PCI; and
        determining, based on the second indication information and the synchronization signal, a second PCI for accessing a second cell of the second RAT.

7.  The method according to claim 6, wherein the first RAT is NR, and the second RAT is 6G;

    frequency domain resources comprised in the first cell are contiguous in frequency domain; and
    frequency domain resources comprised in the second cell are non-contiguous in frequency domain.

8.  A communication method, comprising:

    sending a synchronization signal, wherein the synchronization signal is associated with a first RAT;
    the synchronization signal indicates first indication information, and the first indication information indicates a second RAT; or
    the synchronization signal indicates scheduling information of first common information, the first common information comprises first indication information, and the first indication information indicates a second RAT; and
    the first RAT is different from the second RAT.

9.  The method according to claim 8, wherein the synchronization signal comprises a PSS and/or an SSS, or the synchronization signal comprises an SSB.

10. The method according to claim 8 or 9, wherein when the first RAT is NR and the second RAT is 6G,

    the synchronization signal indicates the first indication information, and the first indication information is carried in a MIB; or
    the synchronization signal indicates scheduling information of first common information, the first common information is a SIB, and the first indication information is carried in the SIB.

11. The method according to any one of claims 8 to 10, wherein the first RAT is NR, the second RAT is 6G, the synchronization signal comprises the SSB, a quantity of physical cell identifiers PCIs corresponding to the first RAT is 1008, and a quantity of PCIs supported by the second RAT is greater than 1008.

12. The method according to any one of claims 8 to 11, wherein the sending the synchronization signal comprises:
    sending the synchronization signal in a first cell of the first RAT, wherein the first cell is associated with a first PCI; and
    the method further comprises:
    sending second indication information, wherein the second indication information indicates a value range of the first PCI, and the second indication information and the first PCI jointly indicate a second PCI of a second cell of the second RAT.

13. The method according to claim 12, wherein the first RAT is NR, and the second RAT is 6G;

    frequency domain resources comprised in the first cell are contiguous in frequency domain; and
    frequency domain resources comprised in the second cell are non-contiguous in frequency domain.

14. A communication apparatus, comprising a module configured to perform the method according to any one of claims 1 to 7.

15. A communication apparatus, comprising a module configured to perform the method according to any one of claims 8 to 13.

**16.** A communication system, comprising the communication apparatus according to claim 14 and comprising the communication apparatus according to claim 15.

**17.** A computer-readable storage medium, wherein the storage medium stores computer instructions, and when the computer instructions are run, the method according to any one of claims 1 to 7 or the method according to any one of claims 8 to 13 is implemented.

**18.** A computer program product, wherein the computer program product comprises instructions, and when the instructions are run by a communication apparatus, the communication apparatus performs the method according to any one of claims 1 to 7, or performs the method according to any one of claims 8 to 13.

**19.** A communication apparatus, comprising:
a processor, configured to execute computer instructions stored in a memory, to cause the apparatus to perform the method according to any one of claims 1 to 7 or the method according to any one of claims 8 to 13.

FIG. 1

FIG. 2

FIG. 3(a)

Subframe | 0 | 1 | 2 | 3 | 4 | 5 | 6 | 7 | 8 | 9 | 0 | 1 | 2 | 3 | 4 | 5 | 6 | 7 | 8 | 9 |

Symbol | 0 | 1 | 2 | 3 | 4 | 5 | 6 | 0 | 1 | 2 | 3 | 4 | 5 | 6 |

SSS        PSS

FIG. 3(b)

Subframe | 0 | 1 | 2 | 3 | 4 | 5 | 6 | 7 | 8 | 9 | 0 | 1 | 2 | 3 | 4 | 5 | 6 | 7 | 8 | 9 |

Symbol | 0 | 1 | 2 | 3 | 4 | 5 | 6 | 0 | 1 | 2 | 3 | 4 | 5 | 6 |

SSS

Symbol | 0 | 1 | 2 | 3 | 4 | 5 | 6 | 0 | 1 | 2 | 3 | 4 | 5 | 6 |

PSS

FIG. 3(c)

| PBCH | PSS | | | SIB1 | PSS | | | PBCH | PSS | | | PSS |
|------|-----|--|--|------|-----|--|--|------|-----|--|--|-----|

SSB ||||||||

SIB1 ||||||

## FIG. 4

```
┌──────────────┐                          ┌──────────────┐
│ Base station │                          │   Terminal   │
└──────────────┘                          └──────────────┘
```

501: Synchronization signal, where
the synchronization signal is
associated with a first RAT

502: Determine first indication
information based on the synchronization
signal, where the first indication
information indicates a second RAT

503: Access the second
RAT based on the first
indication information

## FIG. 5

```
┌──────────────┐                          ┌──────────────┐
│ Base station │                          │ Terminal #A  │
└──────────────┘                          └──────────────┘
```

601: Synchronization signal

602: First common information

603: First RACH

## FIG. 6

Communication apparatus 700

Processing unit 710 — Communication unit 720

FIG. 7

Apparatus 800

Processor 810 ↔ Interface circuit 820

Memory 830

FIG. 8

## INTERNATIONAL SEARCH REPORT

| | International application No. |
|---|---|
| | **PCT/CN2024/116232** |

**A.    CLASSIFICATION OF SUBJECT MATTER**

H04W 56/00(2009.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT; CNKI; VEN; ENTXT; 3GPP: 同步信号, 无线接入技术, 共同, 公共, 相同, 共享, 物理小区标识, PSS, SSS, SSB, RAT, common, same, share, PBCH, SIB, PCI, 6G, NR

**C.    DOCUMENTS CONSIDERED TO BE RELEVANT**

| Category* | Citation of document, with indication, where appropriate, of the relevant passages | Relevant to claim No. |
|---|---|---|
| X | CN 111165023 A (QUALCOMM INC.) 15 May 2020 (2020-05-15) description, paragraphs [0039]-[0145], and figures 1-19 | 1-19 |
| X | CN 107950060 A (QUALCOMM INC.) 20 April 2018 (2018-04-20) description, paragraphs [0032]-[0098] | 1-19 |
| A | CN 114642044 A (HUAWEI TECHNOLOGIES CO., LTD.) 17 June 2022 (2022-06-17) entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 November 2024** | **28 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/116232** |

| Patent document cited in search report | | | Publication date (day/month/year) | Patent family member(s) | | | Publication date (day/month/year) |
| --- | --- | --- | --- | --- | --- | --- | --- |
| CN | 111165023 | A | 15 May 2020 | EP | 3692745 | A1 | 12 August 2020 |
| | | | | EP | 3692745 | B1 | 08 March 2023 |
| | | | | WO | 2019070453 | A1 | 11 April 2019 |
| | | | | US | 2019104487 | A1 | 04 April 2019 |
| | | | | US | 10687291 | B2 | 16 June 2020 |
| CN | 107950060 | A | 20 April 2018 | EP | 3348094 | A2 | 18 July 2018 |
| | | | | EP | 3348094 | B1 | 15 September 2021 |
| | | | | ES | 2893428 | T3 | 09 February 2022 |
| | | | | JP | 2018533265 | A | 08 November 2018 |
| | | | | JP | 6833826 | B2 | 24 February 2021 |
| | | | | TW | 201711501 | A | 16 March 2017 |
| | | | | TWI | 709350 | B | 01 November 2020 |
| | | | | WO | 2017044223 | A2 | 16 March 2017 |
| | | | | WO | 2017044223 | A3 | 27 April 2017 |
| | | | | CA | 2995363 | A1 | 16 March 2017 |
| | | | | CA | 2995363 | C | 17 October 2023 |
| | | | | BR | 112018004483 | A2 | 25 September 2018 |
| | | | | KR | 20180051585 | A | 16 May 2018 |
| | | | | KR | 102497081 | B1 | 06 February 2023 |
| | | | | US | 2017070967 | A1 | 09 March 2017 |
| | | | | US | 10602465 | B2 | 24 March 2020 |
| CN | 114642044 | A | 17 June 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023112717688